# EUROPÄISCHE PATENTANMELDUNG

(11) **EP 1 051 057 A2**
(43) Veröffentlichungstag der Anmeldung: **08.11.2000**
(21) Anmeldenummer: 00440111.3
(22) Anmeldetag: 25.04.2000
(51) Int. Cl.: H04Q 11/04

(54) **Transport von verknüpften Containern in einem synchronen Nachrichtenübertragungsnetz**

(30) Priorität: 29.04.1999 DE 19919768; 30.11.1999 DE 19957577
(71) Anmelder: ALCATEL, 75008 Paris (FR)
(72) Erfinder: Turban, Karl-Albert, 71229 Leonberg-Höfingen (DE)
(74) Vertreter: Urlichs, Stefan

(57) **Zusammenfassung**

Gemäß den Empfehlungen der ITU für SDH oder SONET, kann eine Nutzlast, die die Übertragungskapazität des größten virtuellen Containers übersteigt, auf mehrere verkettete virtuelle Container aufgeteilt werden. Nach einem Verfahren zum Übertragen einer solchen Nutzlast über ein synchrones Nachrichtenübertragungsnetz (NET) wird die Nutzlast in Blöcke geteilt und die einzelnen Blöcke werden in virtuelle Container (VC4) verpackt, die jeweils einen Kopfbereich und einen Nutzlastbereich aufweisen und als virtuelle Verkettung in mindestens einem Transportmodul transportiert werden. In den Kopfbereich aller virtuellen Container (VC4) bis auf den in der Verkettung letzten virtuellen Container wird jeweils ein Zeiger (Z) auf den in der Verkettung folgenden virtuellen Container eingetragen. Dies ermöglicht, während einer Verbindung die Anzahl der verketteten virtuellen Container (VC4) zu verändern.

## Beschreibung

Die Erfindung betrifft ein Verfahren und eine Vorrichtung zum Transport von einer Nutzlast in einem synchronen Nachrichtenübertragungsnetz in Form von verketteten virtuellen Containern.

In einem synchronen Nachrichtenübertragungsnetz, das nach den ITU-T Empfehlungen für synchrone digitale Hierarchie (SDH) oder Synchronous Optical Network (SONET) arbeitet, werden Nutzsignale in einer Rahmenstruktur übertragen, deren Rahmen als synchrone Transportmodule bezeichnet werden. Die Grundeinheit ist das Transportmodul STM-1. Größere Transportmodule vom Typ STM-4, STM-16 oder STM-64 werden durch byteweises Verschachteln von mehreren (4, 16 oder 64) STM-1 erzeugt. Die Transportmodule enthalten einen oder mehrere virtuelle Container, in denen die zu transportierende Nutzlast (payload) enthalten ist. Der größte virtuelle Container mit einer Übertragungskapazität von 145 Mbit/sec ist der VC-4. Eine Nutzlast, die größer als die Kapazität des VC-4 ist, kann in Form von verknüpften oder verketteten Containern übertragen werden. Dies bedeutet, daß das Nutzlastsignal in Blöcke zerteilt wird, die jeweils in einem VC-4 transportiert werden und daß durch die Verkettung gewährleistet wird, daß die Blöcke am anderen Ende des Transportnetzes wieder mit richtiger Phasenlage in der ursprünglichen Reihenfolge zusammengesetzt werden können.

Es gibt zwei Formen der Verkettung die als virtual concatenation und contiguous concatenation bezeichnet werden. Beide Formen sollen auch ineinander überführbar sein. Die Erfindung betrifft hauptsächlich die erste Form der Verkettung, die virtual concatenation, beschäftigt sich aber auch damit, wie die beidem Formen der Verkettung vorteilhaft ineinander übergeführt werden können. Bei contigous concatenation werden die verketteten Container als Einheit in einem größeren Transportmodul, z.B. STM-4, übertragen und nur der Kopfbereich des ersten der verketteten VCs wird ausgewertet. Bei virtual concatenation werden die verketteten Container unabhängig von einander übertragen und erst am Ende der Übertragungsstrecke wieder in ursprünglicher Phasenlage und Reihenfolge wieder zusammengesetzt. Meist wird zunächst eine Verkettung nach contiguous concatenation erzeugt und diese anschließend in eine Verkettung nach virtual concatenation umgewandelt.

Die bisherigen Vorschläge sehen vor, daß alle Funktionen der virtual concatenation von einem Management-System ("network manager") administriert werden müssen. Ein weiterer Vorschlag sieht vor, daß die virtuellen Container eine Kennung enthalten, die als TTI (Trail Trace Identifier) bezeichnet wird. Diese Kennung ist im J1-Byte des Path Overhead (Kopfbereich) jedes virtuellen Containers enthalten, bezeichnet die Quelle des jeweiligen virtuellen Containers und wird üblicherweise von dem Management-System des Netzes vergeben. Alle virtuellen Container, die mittels der virtual concatenation verknüpft werden, sollen gemäß des weiteren Vorschlags mit derselben Kennung versehen werden. Die bisherige Praxis ist jedoch, daß alle virtuellen Container verschiedene Kennungen erhalten. In den bisher vorgeschlagenen Lösungen für die Verkettung von virtuellen Container bestehen folgende Nachteile:
- Die Anzahl der verknüpften Container kann während einer Verbindung nicht geändert werden, weil die Änderung der Anzahl verketteter Container synchron in allen Netzknoten erfolgen müßte. Das Management gewährleistet dies a priori nicht.
- Die Reihenfolge, in der die Container in der Multiplexstruktur übertragen werden muß administriert werden.
- Die Identifikation der einzelnen Container einer Verkettung ist nicht genau beschrieben.
- Treffen Container in falscher Reihenfolge ein, so werden nach dem heutigen Stand der Spezifikationen irreführende Alarme erzeugt.
- Die heutigen Managementsysteme sind nicht darauf vorbereitet, mehrere Container mit identischem TTI korrekt zu behandeln.

Aufgabe der Erfindung ist es, ein Verfahren zum Übertragen einer Nutzlast in Form von verketteten Containern anzugeben, welches variabel eingesetzt werden kann und die Nachteile der bisherigen Lösungen überwindet. Insbesondere ist es eine Aufgabe der Erfindung, ein Verfahren anzugeben, bei dem die Anzahl der verketteten Container während einer Übertragung verändert werden kann. Eine weitere Aufgabe ist es, ein Netzelement anzugeben, mit dem das Verfahren durchgeführt werden kann.

Die Aufgabe wird hinsichtlich des Verfahrens gelöst durch die Merkmale des Anspruchs 1 und hinsichtlich des Netzelementes durch die Merkmale des Anspruchs 10. Vorteilhafte Ausgestaltungen sind in den abhängigen Ansprüchen angegeben.

Die Erfindung weist folgende Vorteile auf:
- Eine virtuelle Verkettung erfordert kein Management variabler Kapazität während der Dauer einer Verbindung.
- Die Reihenfolge in der die virtuellen Container in der Multiplexstruktur (STM-N) übertragen werden, ist beliebig. Durch das erfindungsgemäße Verfahren werden die Container am anderen Ende der Übertragungsstrecke automatisch wieder sortiert.
- Es müssen nur solche Netzknoten nachgerüstet werden, in denen die Konvertierung von virtueller Verkettung (virtual concatenation) in nahtlose Verkettung (contiguous concatenation) erfolgt und umgekehrt.
- Alle zu einer virtuellen Verkettung gehörenden virtuellen Container (VC) lassen sich eindeutig identifizieren.
- Mehrere virtuelle Verkettungen können in einer Multiplexstruktur (STM-N) übertragen werden, ohne daß eine Verwechslung der virtuellen Container auftreten kann.

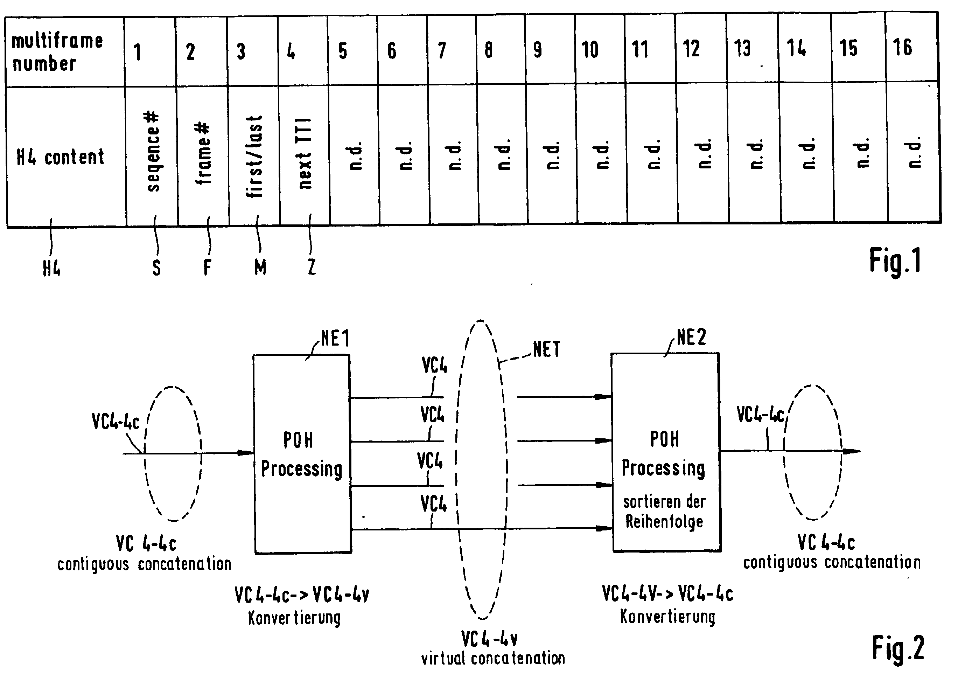

Im folgenden wird die Erfindung anhand der Figuren 1 und 2 in einem Ausführungsbeispiel erläutert. Es zeigt:
- Figur 1:: einen H4 Multiframe in dem die Sequenznummer eingefügt wird und
- Figur 2:: die Konvertierung von virtual concatenation zu contiguous concatenation am Beispiel des VC-4-4(c/v).

Jeder virtuelle Container stellt eine logische Verbindung in dem Nachrichtenübertragungsnetz dar. Daher erhält jeder Container eine eigene TTI vom Management-System. Verkettete Container bei einer contiguous concatenation stellen dagegen nur eine einzige logische Verbindung in dem Nachrichtenübertragungsnetz dar.

Bei contiguous concatenation besitzen alle miteinander verknüpften Container nur eine einzige TTI, da nur der Kopfbereich des ersten Containers ausgewertet wird. Bei der Umwandlung von contiguous zu virtual concatenation müssen nun jedoch alle VC4s eine TTI erhalten. Prinzipiell bestehen zwei Möglichkeiten: Entweder erhalten alle verketteten VC4s dieselbe TTI oder es werden vorbestimmte TTIs verwendet, die z.B. nach einem vorbestimmten Bildungsgesetz zu ermitteln sind oder einer vom Management-System geführten Tabelle entnommen sind. Beide Möglichkeiten können entsprechend der Erfindung verwendet werden.

Ein Grundgedanke der Erfindung besteht nun darin, bei verketteten virtuellen Containern zusätzlich einen Zeiger auf den in der Verkettung folgenden Container in den Kopfbereich einzufügen.

Dazu wird in das H4-Byte im POH (path overhead) der VC4s eine Sequenznummer eingefügt. Zudem wird in jeden der verketteten Container die Sequenznummer des nächsten VC4s eingefügt. Dadurch ist die Reihenfolge der VC4s in der diese verkettet sind eindeutig bestimmt.

Die im J1-Byte enthalte TTI zusammen mit der Sequenznummer im H4-Byte können als "neue" TTI angesehen werden, d.h. als TTI die um die im H4-Byte enthaltene Sequenznummer ergänzt ist.

Sind also vier virtuelle Container VC-4 verknüpft, so erhalten diese beispielsweise Sequenznummern von 1 bis 4. Vorteilhaft kann zusätzlich eine Rahmennummer eingefügt werden. Diese wird mit jedem übertragenen Rahmen heraufgezählt. Der Reihenfolge nach kommen also zunächst jeweils die Rahmen mit der Sequenznummer 1-4 und der Rahmennummer 1, dann die Rahmen mit der Sequenznummer 1-4 und der Rahmennummer 2 usw.. Der jeweils erste und letzte Container der Verkettung kann zusätzlich als erster bzw. letzter Container markiert werden.

Durch den Zeiger auf den nächstfolgenden Container wird ermöglicht, daß die Zahl der Container im Laufe der Verbindung verändert werden kann. Dies ermöglicht eine variable Bandbreitenanpassung.

Im Ausführungsbeispiel sind somit die folgenden Maßnahmen vorgesehen:
- Alle VCs einer "virtual concatenation" erhalten dieselben oder eine bekannte TTI.
- In den Bytes des H4 Multiframes wird die vorgeschlagene Sequenznummer und eine Rahmennummer übertragen.
- Zusätzlich werden in dem H4 Multiframe auf den Ersatzbytes Kennungen vorgesehen für:
   - den ersten VC-4 in der virtuellen Verkettung,
   - den TTI des nächsten VC-4,
   - den letzen VC-4 in der virtuellen Verkettung,
   - Hinzufügen eines VC-4 in die bestehende virtuelle Verkettung und
   - Entfernen eines VC-4 aus der bestehenden virtuellen Verkettung.

Diese Implementierung erlaubt durch Auswertung der TTI und der H4-Multiframes ohne weitere Signalisierung die Kapazität anzupassen. Im Falle, daß in der SDH Multiplexstruktur der eine oder andere VC-4 nicht mit Nutzlast - oft auch als Nutzinformation bezeichnet - belegt ist, kann diese Übertragungskapazität mit "extra traffic" gefüllt werden. Bei einer virtuellen Verkettung bedeutet dies, daß wenn einer der verketteten Container nicht mit einem Nutzsignalblock belegt ist, dieser Container aus der Verkettung herausgenommen wird, indem in dem vorhergehenden Container die Sequenznummer des folgenden Containers eingetragen wird.

In Figur 1 ist ein H4-Multiframe dargestellt. Er besteht aus einer Aneinanderreihung der H4-Bytes H4 zeitlich aufeinanderfolgender Container, d.h. das H4-Byte desselben Containers wird Rahmen für Rahmen erneut betrachtet. In der ersten Zeile des Multiframes ist die Nummer von 1 bis 16 aufgetragen. In der zweiten Spalte wird der Inhalt des entsprechenden H4-Bytes dargestellt. Zeitlich betrachtet enthält das H4-Byte also im ersten Rahmen die Sequenznummer S, im zweiten Rahmen die fortlaufende Rahmennummer F, im dritten Rahmen die Kennzeichnung M für den ersten oder letzten Container der Verkettung und im vierten Rahmen als Zeiger Z auf den folgenden Container die erweiterte TTI, d.h. die Sequenznummer des in der Verkettung folgenden Containers. Die übrigen zwölf Felder des H4-Multipfames werden im Ausführungsbeispiel nicht genutzt (n.d.: not defined).

Die Verwendung des Feldes "first/last" ist bei einer virtuellen Verkettung von n Containern wie in Tabelle 1 angegeben.

**Tabelle 1**

| | Bit 0 | Bit 1 | Bit 2 | Bit 3 | Bit 4 | Bit 5 | Bit 6 | Bit 7 |
|---|---|---|---|---|---|---|---|---|
| Erster VC4 in der virtuellen Verkettung | ID #0 | ID #1 | ID #2 | ID #3 | 0 | 0 | 0 | 0 |
| Zweiter bis (n-1)ter VC4 | ID #0 | ID #1 | ID #2 | ID #3 | 0 | 1 | 0 | 1 |
| Einfügen eines VC4 beim nächsten Multiframe | ID #0 | ID #1 | ID #2 | ID #3 | 1 | 1 | 0 | 0 |
| Entfernen eines VC4 beim nächsten Multiframe | ID #0 | ID #1 | ID #2 | ID #3 | 0 | 0 | 1 | 1 |
| Letzter VC4 in der Verkettung | ID #0 | ID #1 | ID #2 | ID #3 | 1 | 1 | 1 | 1 |

Die Bits ID#0 bis ID#3 erlauben eine Kennung (ID) für die virtuelle Verkettung zu vergeben. Anhand dieser Kennung lassen sich zusammengehörige Container erkennen. Werden mehrere virtuelle Verkettungen in einer Multiplexstruktur übertragen, so müssen entweder die IDs verschieden sein oder die TTIs verschieden sein.

Das Einfügen und Entfernen eines VC-4 kann immer nur zum Beginn eines Multiframes erfolgen. D.h. die Indikation wird mit der nächsten Multiframenummer gültig. Es kann an jeder Stelle ein VC-4 eingefügt werden. Die Codierung des "next TTI" Feldes erfolgt im Ausführungsbeispiel nach den folgenden Regeln und stellt eine verzeigerte Liste dar:
- Regel 1:: Das "next TTI" Feld des letzten VC-4 trägt die Kennung des ersten VC-4.
- Regel 2:: Wird ein VC-4 in die virtuelle Verkettung eingefügt, so zeigt das "next TTI" Feld auf die erweiterte TTI des neu eingefügten VC-4.
- Regel 3:: Wird nach dem aktuell letzten VC-4 ein neuer VC-4 in die virtuelle Verkettung eingefügt, zeigt das "next TTI" Feld des aktuell letzten VC-4 auf die neue TTI.
- Regel 4:: Wird vor dem aktuell ersten VC-4 ein VC-4 eingefügt, zeigt das "next TTI" Feld des letzen VC-4 auf den neuen ersten VC-4 und das aktuell erste "next TTI" Feld auf die TTI des aktuell zweiten VC-4 der virtuellen Verkettung.
- Regel 5:: Wird ein VC-4 entfernt, so zeigt das "next TTI" Feld des vorhergehenden Containers auf die TTI des VC-4, der auf den VC-4 folgt, der entfernt wird.
- Regel 6:: Wird der letzte VC-4 entfernt, zeigt das "next TTI" des aktuell vorletzten Containers auf den ersten VC-4.
- Regel 7:: Wird der aktuell erste VC-4 entfernt, zeigt das "next TTI" Feld des aktuell letzten VC-4 auf den aktuell zweiten VC-4 der virtuellen Verkettung.

Das erfindungsgemäße Netzelement betrifft einen solchen Netzknoten, der eine Konvertierung von nahtloser Verkettung (contiguous concatenation) in virtuelle Verkettung (virtual concatenation) oder umgekehrt durchführt. Bei der Konvertierung von virtueller Verkettung in nahtlose Verkettung werden die H4-Multiframes ausgewertet und die Bytes entsprechend der Reihenfolge in dem "next TTI" Feld in die Struktur der nahtlosen Verkettung eingebaut. Umgekehrt bei der Konvertierung von nahtloser Verkettung in virtuelle Verkettung können die TTI wie bisher frei bestimmt werden und eine Schaltung zur Generierung des H4-Multiframes übernimmt das Codieren der entsprechenden Felder im Multiframe auf die vorstehend erläuterte Weise.

In Figur 2 ist die Konvertierung von nahtloser in virtuelle Verkettung und wieder zurück dargestellt. Die Figur zeigt ein erstes Netzelement NE1 und ein zweites Netzelement NE2, die über ein synchrones Nachrichtenübertragungsnetz NET verbunden sind. Zwischen den beiden Netzelementen sind vier Verbindungen VC4 eingerichtet, die auch als Pfade bezeichnet werden. Jeder dieser Pfade wird durch einen virtuellen Container vom Typ VC-4 repräsentiert. Die vier virtuellen Container, die zwischen den beiden Netzelementen ausgetauscht werden sind virtuell verkettet, so daß eine gesamte Nutzlast der vierfachen VC-4-Kapazität übertragen werden kann. Beide Netzelemente besitzen eine Kopfbereichsbearbeitungsschaltung zur Generierung des H4-Multiframes, in der die Auswertung der empfangenen H4-Bytes und die Generierung der zu sendenden H4-Bytes vorgenommen wird.

Das erste Netzelement NE1 erhält als Eingangssignal ein rahmenstrukturiertes synchrones Nachrichtensignal, welches eine nahtlose Verkettung vom Typ VC-4-4c aufweist, d.h. bei dem vier virtuelle Container in einer Multiplexstruktur, die mindestens die Größe eines STM-4 hat, als nahtlose Verkettung übertragen werden.

In dem ersten Netzelement wird der Kopfbereich (Path Overhead) des ersten virtuellen Containers der Verkettung ausgewertet. Da es sich um eine nahtlose Verkettung handelt, wird der Kopfbereich der übrigen Container ignoriert. Dann wird die nahtlose Verkettung in eine virtuelle Verkettung umgewandelt, indem für jeden der virtuellen Container eine TTI und eine Sequenznummer vergeben wird. Die TTI wird in das J1-Byte geschrieben und die Sequenznummer in ein Byte des H4-Multiframes. Zusätzlich wird in den H4-Multiframe als Zeiger die Sequenznummer des in der Verkettung folgenden Containers und eine fortlaufende Rahmennummer eingefügt. Die virtuellen Container werden dann jeweils in einen STM-1 Rahmen eingefügt, welche dann an entsprechenden Schnittstelleneinrichtungen des ersten Netzelementes als unabhängige Nachrichtensignale über das Nachrichtenübertragungsnetz NET gesendet werden.

In dem zweiten Netzelement NE2 wird die virtuelle Verkettung wieder in eine nahtlose Verkettung umgewandelt. Dazu wird der Kopfbereich der vier ankommenden virtuellen Container VC-4 ausgewertet und dabei die TTI im J1-Byte und Sequenznummer, Rahmennummer und Zeiger im H4-Multiframe gelesen. Anhand dieser Informationen werden die empfangenen Container entsprechend ihrer Reihenfolge in der Verkettung sortiert und in richtiger Reihenfolge als nahtlose Verkettung vom Typ VC-4-4c in eine neue Multiplexstruktur vom Typ STM-4 eingefügt. Diese wird dann an dem Ausgang des zweiten Netzelementes NE2 als Ausgangssignal gesendet.

Das erste Netzelement verfügt über eine Schaltungsanordnung zum Erzeugen der virtuellen Verkettung und über eine

Kopfbereichsbearbeitungsschaltung zum Bearbeiten des Kopfbereichs der virtuellen Container und zum Eintragen des Zeigers auf den in der Verkettung folgenden virtuellen Container in den Kopfbereich der virtuellen Container. Diese beiden Schaltungen können sowohl separat ausgeführt als auch durch eine gemeinsame mikroprozessorgesteuerte Schaltung mit zugehöriger Steuerungssoftware realisiert sein.

Das zweite Netzelement besitzt neben der Kopfbereichsbearbeitungsschaltung eine Sortiereinrichtung zum Sortieren der Reihenfolge der empfangenen virtuellen Container in die Reihenfolge gemäß der Verkettung, die durch die Sequenz- und Rahmennummern im jeweiligen H4-Multiframe der empfangenen virtuellen Container bestimmt wird. Wie beim ersten Netzelement können diese Schaltungen sowohl separat als auch durch eine gemeinsame mikroprozessorgesteuerte Schaltung mit zugehöriger Steuerungssoftware ausgeführt sein.

Im Ausführungsbeispiel wurde die Erfindung anhand der Multiplexhierarchie und Nomenklatur von SDH beschrieben. Sie ist jedoch analog anwendbar auf andere Nachrichtenübertragungssysteme wie z.B. SONET. Auch wenn das Ausführungsbeispiel sich auf Verkettungen von virtuellen Containern des Typs VC-4 beschränkt, ist die Erfindung in analoger Weise auf andere Typen von Verkettung anwendbar, wie z.B. auf eine Verkettung virtueller Container vom Typ VC-12 oder VC-11.

## Patentansprüche

1. Verfahren zum Übertragen einer Nutzlast über ein synchrones Nachrichtenübertragungsnetz (NET), wobei bei dem Verfahren
- die Nutzlast in Blöcke geteilt wird und die einzelnen Blöcke in virtuelle Container (VC4) verpackt werden, die jeweils einen Kopfbereich und einen Nutzlastbereich aufweisen,
- die einzelnen virtuellen Container miteinander verkettet werden und
- die virtuellen Container (VC4) in mindestens einem Transportmodul transportiert werden,
**dadurch gekennzeichnet**, daß
in den Kopfbereich aller virtuellen Container bis auf den in der Verkettung letzten virtuellen Container jeweils ein Zeiger (Z) auf den in der Verkettung folgenden virtuellen Container eingetragen wird.

2. Verfahren nach Anspruch 1, bei dem in den Kopfbereich jedes in der Verkettung letzten virtuellen Containers ein Zeiger (Z) auf den in der Verkettung ersten virtuellen Containers eingetragen wird.

3. Verfahren nach Anspruch 1, bei dem in den Kopfbereich aller virtuellen Container jeweils eine Sequenznummer (S) eingefügt wird und bei dem als Zeiger (Z) die Sequenznummer des in der Verkettung folgenden virtuellen Containers eingetragen wird.

4. Verfahren nach Anspruch 1, bei dem in den Kopfbereich jedes virtuellen Containers zusätzlich eine Rahmennummer (F) eingetragen wird.

5. Verfahren nach Anspruch 1, bei dem in dem Kopfbereich des ersten virtuellen Containers der verketteten virtuellen Container zusätzlich eine erste Markierung (M) eingetragen wird.

6. Verfahren nach Anspruch 1, bei dem in dem Kopfbereich des letzten virtuellen Containers der verketteten virtuellen Container zusätzlich eine zweite Markierung (M) eingetragen wird.

7. Verfahren nach Anspruch 1, bei dem in den Kopfbereich von zumindest einem virtuellen Container eingetragen wird, daß ein weiterer virtueller Container zu den verketteten virtuellen Container eingefügt wurde.

8. Verfahren nach Anspruch 1, bei dem in den Kopfbereich von zumindest einem virtuellen Container eingetragen wird, daß einer der verketteten virtuellen Container entfernt wurde.

9. Verfahren nach einem der vorgehenden Ansprüche, bei dem für die Einträge das H4-Byte (H4) im Kopfbereich der virtuellen Container VC-4 verwendet wird.

10. Netzelement (NE1, NE2) für ein synchrones Nachrichtenübertragungsnetz (NET) mit einer Schaltungsanordnung zum Erzeugen einer virtuellen Verkettung von virtuellen Containern (VC4), die jeweils einen Kopfbereich und einen Nutzlastbereich aufweisen und in denen ein Nutzlastsignal blockweise aufgeteilt transportiert wird, und mit mindestens einer Schnittstellenschaltung zum Senden der einzelnen virtuellen Container (VC4) in Form eines oder mehrerer rahmenstrukturierter synchroner Nachrichtensignale,
**gekennzeichnet durch**
eine Kopfbereichsbearbeitungsschaltung zum Bearbeiten des Kopfbereichs der virtuellen Container (VC4) und zum Eintragen eines Zeiger (Z) auf den in der Verkettung folgenden virtuellen Container (VC4) in den Kopfbereich der virtuellen Container.

11. Netzelement nach Anspruch 10 mit einer weiteren Schnittstellenschaltung zum Empfangen eines rahmenstrukturierten Nachrichtensignals, welches eine Anzahl von nahtlos verketteten virtuellen Containern enthält, wobei die Schaltungsanordnung zum Umwandeln der nahtlosen Verkettung in eine virtuelle Verkettung der virtuellen Container dient.

12. Netzelement nach Anspruch 10, welches zusätzlich eine Sortiereinrichtung zum Sortieren der Reihenfolge empfangener virtueller Container in die Reihenfolge gemäß der Verkettung, wie sie durch die Zeiger im Kopfbereich der virtuellen Container bestimmt wird, aufweist.
